# EUROPEAN PATENT APPLICATION

(11) **EP 1 356 913 A1**
(43) Date of publication of application: **29.10.2003**
(21) Application number: 03008786.0
(22) Date of filing: 22.04.2003
(51) Int. Cl.: B29C 45/33, B29C 45/44, A47B 13/10

(54) **Collapsible table formed of injection-molded half-sections**

(30) Priority: 23.04.2002 US 127688
(71) Applicant: KETER PLASTIC LTD., Herzelyia 46852 (IL)
(72) Inventor: Sami, Sagoi, Ramat Hasharon 47254 (IL)
(74) Representative: VOSSIUS & PARTNER

(57) **Abstract**

A system for injection molding a half-section (10,11) of a collapsible table that includes a pair of interhinged half-sections. The system is provided with a mold whose dimensions are appropriate to the half-section to be molded therein, and a driven carrier (20) adjacent one end of the mold having cantilevered therefrom parallel core rods (15R-18R) that project into the mold. When the carrier (20) is driven to cause the core rods (15R-18R) to occupy an "in" position in which the rods (15R-18R) are fully within the mold and extend the full length thereof, molten plastic is then injected into the mold to submerge the rods therein. When the plastic cures and rigidifies, parallel reinforcing beams (15-18) are then created about the rods which are integrated with the resultant half-section. When the carrier (20) is driven to withdraw the rods (15R-18R) from the mold which are now in an "out" position, the reinforcing beams (15-18) are then hollow and the resistance of the half-section to bending forces is enhanced.

## Description

This invention relates generally to a collapsible table having a pair of interhinged half-sections, and more particularly to a system for injection molding a reinforced half-section for a collapsible table.

A dining table intended for use only on special occasions, such as for banquets, must be stored when not in use. Since a dining table occupies a relatively large space, the need to store the table presents a problem, particularly when there are many tables to be stored and the storage facilities are limited. A preferred form of banquet table is therefore one that is collapsible to form a compact structure that occupies relatively little storage space.

A typical collapsible table includes a pair of interhinged half-sections to each of which is hingedly attached a leg assembly. To collapse this table its leg assemblies are first folded in against the half-sections of the tabletop, and the half-sections are then folded together to reduce the table to a compact structure requiring little storage space. To erect the table at its site of use, the half-sections are unfolded to form the tabletop and the leg assemblies are folded out to support this tabletop. A collapsible table in this format is disclosed in the US Patent 5,357,872 to Wilmore.

The present invention resides in a collapsible banquet table having beam-reinforced half-sections molded of plastic material. Hence of prior art interest is the US Patent to Pinch et al. 6,058,853 (2000) which discloses a collapsible banquet table having plastic half-sections. These are blow molded and reinforced by rigidified sheets.

Because a banquet table may be subjected to heavy loads in the course of its use, a reinforced table of the Pinch type serves a useful purpose. However, blow molding is a relatively difficult and costly procedure, and the need to include rigidified reinforcing sheets adds to the cost of producing the half-sections of the Pinch table. Consequently the expenses incurred in manufacturing a collapsible table of the Pinch type are substantial and may militate against their sale and use.

In blow molding, air or other gas must be blown into a parison causing it to expand against a mold to form a hollow object whose size and shape is determined by the mold. In injection molding, plastic granules are heated and homogenized in a cylinder until they are sufficiently fluid to permit their injection under pressure into a relatively cold mold where the molten plastic after filling the mold, solidifies to assume the shape and dimensions of the mold cavity. With thermoplastics, no chemical changes occur within the plastics; hence the process is repeatable.

The reason why injection molding of table half-sections lends itself to repeatable mass production thereof is that all that is necessary to produce each half-section is to feed heated molten plastic from the nozzle of a screw-type injector cylinder into the mold and after the half-section has solidified to remove it from the mold which is now in condition to mold the next half-section.

In view of the foregoing, the main object of this invention is to provide a collapsible table whose half-sections are molded of synthetic plastic material and include reinforcing beams to render the table capable of supporting heavy loads which seek to deform the table.

More particularly, an object of this invention is to provide a system for injection molding a beam-reinforced half-section for a collapsible table whereby the beams are hollow and are integrated with the section so as to enhance its resistance to bending forces.

A salient feature of the invention is that each half section includes reinforcing beams parallel to the longitudinal axis of the table and a reinforcing beam parallel to its transverse axis, whereby bending forces which seek to bend the table along either the longitudinal or transverse axis are resisted.

A significant advantage of an injection molding system in accordance with the invention is that it makes it possible to mass produce table half-sections at relatively low cost.

Briefly stated these objects are attained by a system for injection molding a half-section of a collapsible table that includes a pair of interhinged half-sections. The system is provided with a mold whose dimensions are appropriate to the half-section to be molded therein, and a driven carrier adjacent one end of the mold having cantilevered therefrom parallel core rods that project into the mold. When the carrier is driven to cause the core rods to occupy an "in" position in which the rods are fully within the mold and extend the full length thereof, molten plastic is then injected into the mold to submerge the rods therein.

When the plastic cures and is rigidified, parallel reinforcing beams are then created about the rods which are integrated with the resultant half-section. When the carrier is driven to withdraw the rods from the mold which are now in an "out" position, the reinforcing beams are then hollow and the resistance of the half-section to bending forces is enhanced.

These parallel reinforcing beams are parallel to the straight longitudinal axis of the table top and therefore resist bending forces which seek to bend this axis. In order to enhance the resistance of the table top to bending forces which seeks to bend the table along its transverse axis, the far end of each half section is molded to define a channel-shaped transverse beam.

This transverse reinforcing beam is created by inserting into the mold adjacent the ends of the longitudinally-extending core rods a transverse bar profiled to define when molten plastic is injected into the mold, a channel-shaped transverse beam forming the far end of the half-section, the beam including an inwardly-directed ledge that underlies the bar and prevents its withdrawal from the mold.

In order to jiggle the bar after the completion of molding so that it can be withdrawn by swinging it out of and away from the channel-shaped transverse beam, the bar is mounted on a pair of angled arms which are manipulated by a drive mechanism to jiggle the bar.

### BRIEF DESCRIPTION OF THE DRAWINGS

For a better understanding of the invention as well as other objects and further features thereof, reference is now made to the annexed drawings wherein:
Fig. 1 is a perspective view of a collapsible table in accordance with the invention in its erected state composed of an interhinged pair of half-sections;
Fig. 2 shows the underside of the tabletop;
Fig. 3 is a transverse section taken through a half-section; and
Fig. 4 illustrates a system in accordance with the invention for injection molding each half-section of the tabletop.
Fig. 5 is a perspective view of the molded end of the half-section which defines a channel-shaped transverse reinforcing beam; and
Fig. 6 illustrates the profiled bar which in the mold acts to form the transverse beam.

### DETAILED DESCRIPTION OF THE INVENTION

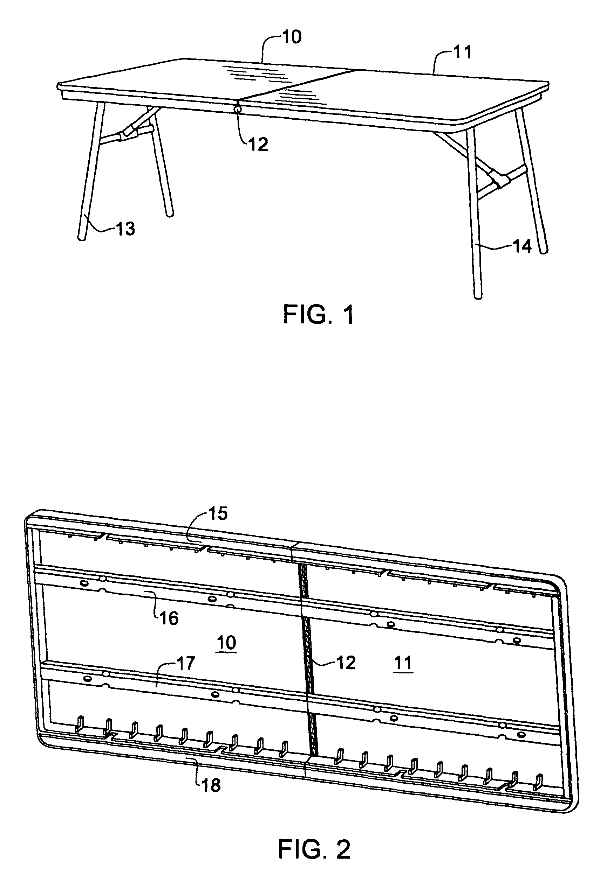

The Collapsible Table: Referring now to Figs. 1 to 3 shown in these figures in a collapsible table in accordance with the invention whose half-sections are reinforced by hollow beams to render the table capable of supporting heavy loads without being deformed thereby as when a banquet table is overloaded with pots and plates containing food, a centerpiece and various other more or less heavy items. The resultant deformation of the tabletop may cause the load to shift and slide off the table. Hence an important aspect of a collapsible tabletop in accordance with the invention is that despite the fact that it is formed of a relatively light weight, plastic structure, it is nevertheless capable of sustaining a heavy load without deformation.

It is to be understood however, that the invention is not limited to a banquet table, for a similar but smaller version of the collapsible table may be used as a worktable or for other purposes; retaining the advantage that when the table is in its collapsible state, the resultant compact structure requires little storage space.

The tabletop of the collapsible table shown in Fig. 1 is composed of a pair of like half-sections 10 and 11 whose adjacent ends are interhinged by a hinge 12. In the operative state of the table, the half-sections are coplanar to create a horizontal table surface. Hinged to the underside of half-section 10 is a leg assembly 13, while hinged to the underside of half-section 11 is a leg assembly 14. In the operative or erect state, the leg assemblies are unfolded to support the tabletop. In the collapsed state, the legs are folded in against the half-sections and the half-sections are then folded together.

To reinforce the half-section of the tabletop so that the table can support heavy loads, each half-section is provided with an array of four parallel beams 15 to 18 which are integral with the half-section. Each beam is hollow and has a rectangular cross-section.

Beams 15 and 18 form the longitudinal borders of the half-section while the inwardly spaced beams 16 and 17 are intermediate to border beams and serve to stiffen the somewhat flexible plastic forming the tabletop.

A hollow beam offers a higher resistance to flexion than a solid beam and though it requires less plastic than a solid beam and it provides greater protection against forces which seek to bend and deform the tabletop.

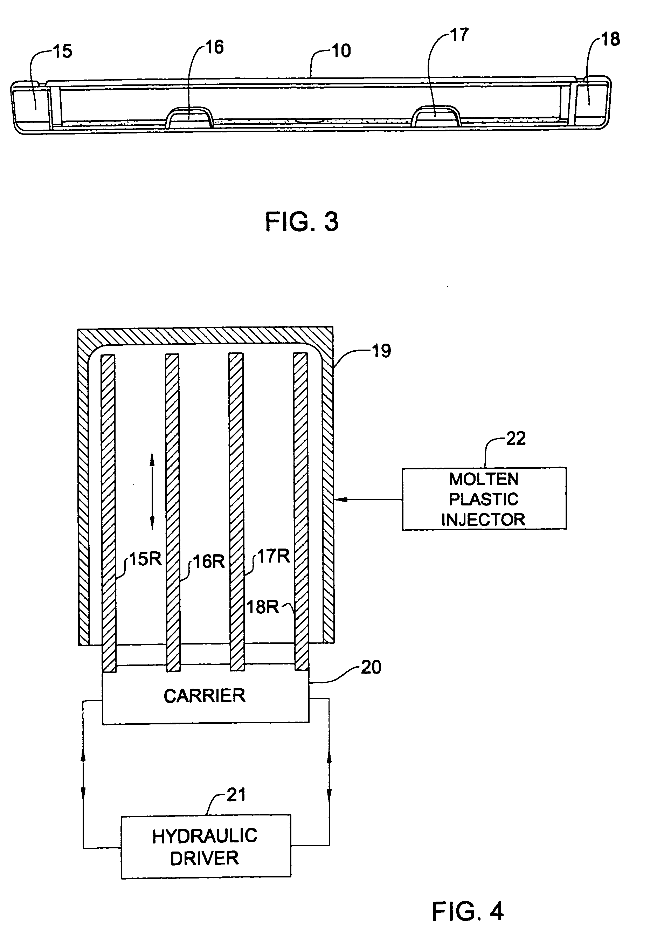

The Injection Molding System: Referring now to Fig. 4, shown schematically therein is a system for injection molding a plastic half-section of the collapsible table illustrated in Figs. 1 to 3.

The system includes a rectangular mold 19 whose cavity dimensions and shape correspond to those of the half-section to be molded, including rounded comers. Adjacent one end of the mold is a carrier 20 driven by hydraulic cylinders 21 or other motorized drive means for reciprocating the carrier so that it performs a forward stroke followed by a reverse stroke. Cantilevered from carrier 20 and projecting into mold 11 are four parallel core rods 15R, 16R, 17R and 18R whose length and cross-sectional dimensions correspond to those of the reinforcing beams 15 to 18 to be integrated into the half-section.

In the forward stroke of carrier 20, the core rods are placed fully within the mold and are therefore in their "in" position. In the reverse stroke of carrier 20, the core rods are fully withdrawn from the mold and therefore they occupy their "out" position.

When the rods occupy their "in" position, hot molten plastic from a screw cylinder source 22 is injected into the mold to fill it and submerge the core rods 15 to 18. When the plastic in the relatively cold mold cures and rigidifies, it forms the half-section having integral therewith reinforcing beams 15 to 18. And when the rods are withdrawn from the mold and are in their "out" position, then the reinforcing beams are hollow and enhance the resistance of the half-section to flexion forces which seek to deform it.

Hence, the system makes possible rapid mass production of half-sections, for when the production of a half-section is completed and taken out of the mold, all that need be done to repeat the operation is to cause the core rods to re-enter the mold to assume their "in" position and to then inject molten plastic into the mold to quickly fill it and submerge the rods. Finally, after the plastic has rigidified, the core rods are retracted and the half-section is removed from the mold.

### Molding of Transverse Reinforcing Beam

A collapsible table in accordance with the invention is provided with a pair of interhinged half-sections 10 and 11 as shown in Figs. 1 and 2. These half-sections are injection molded in a mold, as shown in Fig. 4, into which the four longitudinally-extending core rods 15R and 18R are inserted to define the hollow side beams and the two hollow intermediate beams, all of which are parallel to the longitudinal axis of the table top. These beams therefore act to resist forces which seek to bend the longitudinal axis. When the molten plastic injected into the mold hardens about the core rods, the rods are then hydraulically-retracted so that the molded half-section can be lifted out of the mold.

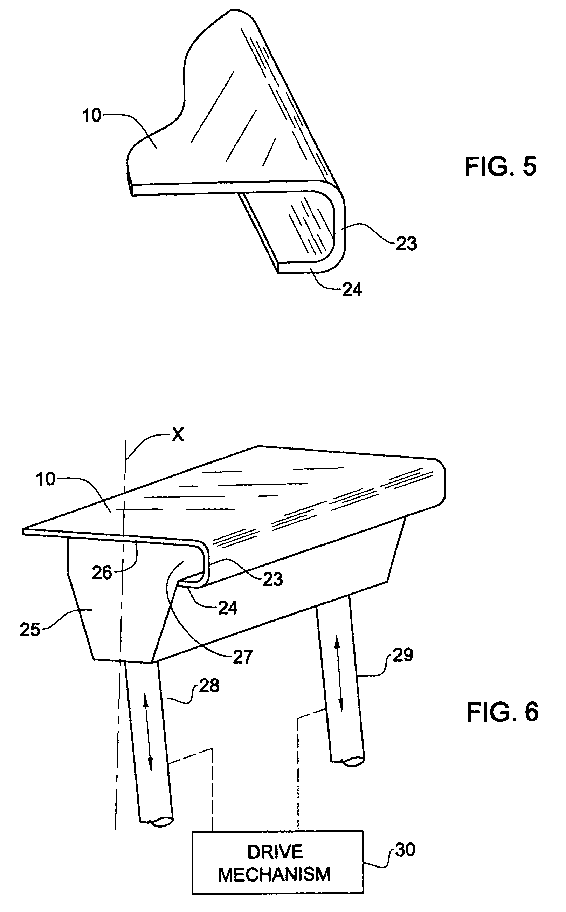

In order to enhance the resistance of the table to bending forces which seek to bend it along the transverse axis, the far end of each half-section is molded, as shown in Fig. 5, in connection with half-section 10 to define a transverse channel-shaped reinforcing beam 23 having an inwardly-directed lower ledge 24. This transverse beam at the end of each half-section of the table top is resistant to forces which seek to bend it along its transverse axis.

In order to form the channel shaped transverse reinforcing beam in each half section of the table top, there is inserted in the mold adjacent its far end a transverse core bar 25 as shown in Fig. 6. Bar 25 has a trapezoidal cross section having a flat base 26 and a nose 27 projecting from the base. Nose 27 is profiled to define the transverse end beam 23 of the table top half-section.

It will be seen in Fig. 6 that the inwardly-directed ledge 27 of the transverse beam underlies the nose 27 of bar 25. Hence upon completion of the molding operation, one cannot simply lift out the molded half-section from the mold in that the ledge of its transverse beam underlies the nose of the core bar.

In order to free the molded piece from bar 25 so that the piece can be lifted out of the mold, it is then first necessary to swing bar 25 out and away from the molded end channel. Hence bar 25, to accomplish this movement must be jiggled.

In order to jiggle bar 25, it is mounted on a pair of parallel arms 28 and 29 which are angled with respect to the vertical axis X. Arms 28 and 29 are driven by a reciprocating drive mechanism 30.

The arrangement is such that in the forward stroke of the drive mechanism, arms 28 and 29 which support core bar 25 are raised to swing the bar sideways out of the channel of the transverse beam. In the downstroke, the arms take the bar away from the channel so that the molded half-section is now free to be lifted out of the mold.

Because the table top is provided along its full length with longitudinally-extending reinforcing beams and at either end with a transverse reinforcing beam, the table top is resistant to whatever bending forces are imposed thereon regardless of their orientation. As a consequence, this relatively light weight injection molded plastic table is capable of sustaining heavy loads which on some occasions it may be called upon to do.

While there has been shown preferred embodiments of a collapsible table in accordance with the invention and a system for mass-producing the half-sections, it is to be understood that many changes may be made therein without departing from the spirit of the invention.

## Claims

1. A system for injection molding a half-section of a collapsible table having a pair of interhinged half-sections supported on leg assemblies, the half-section being reinforced by hollow parallel beams integral therewith, said system comprising:
A. a rectangular mold having a cavity therein whose dimensions and shape are appropriate to the half-section to be molded;
B. a driveable carrier adjacent an end of the mold having parallel core rods cantilevered therefrom which project into the mold, said core rods having positions corresponding to the parallel beams of the half-section and having substantially the same length and cross-section;
C. drive means to reciprocate the carrier so that in a forward stroke the rods occupy an "in" position fully within the mold, and in a reverse stroke are in an "out" position retracted from the mold; and
D. means to inject molten plastic into the mold when the core rods are in their "in" position to fill the mold and submerges the rods whereby when the plastic curves and rigidifies, there is then produced the beam-reinforced half-section, and when the rods are in their "out" position and the half-section is taken out of the mold its beams are then hollow whereby the resistance of the half-section to flexion forces is enhanced.

2. A system as set forth in Claim 1, in which the parallel beams include a pair of border beams extending longitudinally along opposite sides of the half-section, at least one beam being intermediate the border beams.

3. A system as set forth in Claim 2, in which between the border beams at spaced positions are a pair of intermediate beams.

4. A system as set forth in Claim 1, in which the drive means is constituted by a motorized mechanism.

5. A system as set forth in Claim 1, in which the drive means is constituted by hydraulic cylinders.

6. A system as set forth in Claim 1, in which the cavity in the mold is provided with rounded comers at an end thereof to create corresponding comers in the half-section.

7. A system as set forth in Claim 1, in which the means to inject molded plastic into the mold includes a cylinder having an extruder screw in which pellets of thermoplastic material are melted and are extruded from a nozzle.

8. A collapsible table including a pair of interhinged half-sections, each half-section being made by the method set forth in Claim 1.

9. A collapsible table as set forth in Claim 8, in which attached to each half-section and hinged thereto is a leg assembly which when the table is collapsed is folded against the table section.

10. A collapsible table as set forth in Claim 9, in which each half-section is molded of polyethylene.

11. A system as set forth in Claim 1, in which the half-section of the collapsible table is further reinforced by a hollow transverse beam having a channel shape formed at an end of the half-section to resist bending forces which seek to bend the half-section along a transverse axis.

12. A system as in Claim 11, in which the transverse beam is formed by a transverse bar disposed in the mold having a projecting nose that is profiled to define said channel-shaped beam.

13. A system as set forth in Claim 12, in which the channel-shaped beam includes an inwardly-directed ledge that underlies the nose and prevents the withdrawal of the molded half-section from the mold.

14. A system as set forth in Claim 13, further including means to withdraw the nose of the bar out of and away from the channel of the transverse beam upon completion of its molding so that the half-section can then be lifted out of the mold.

15. A system as set forth in Claim 14, in which is provided a jiggle mechanism to swing the bar out of and away from the channel.
